# EUROPEAN PATENT APPLICATION

(11) **EP 4 667 323 A1**
(43) Date of publication of application: **24.12.2025**
(21) Application number: 25181946.2
(22) Date of filing: 11.06.2025
(51) Int. Cl.: B62D 5/093, B62D 5/097

(54) **STEERING APPARATUS**

(30) Priority: 19.06.2024 IT 202400014047
(71) Applicant: OGNIBENE POWER S.P.A., 42124 Reggio Emilia (IT)
(72) Inventor: OGNIBENE, Claudio, 42121 REGGIO EMILIA (IT)
(74) Representative: Corradini, Cesare

(57) **Abstract**

A steering apparatus (100) for vehicles is described, comprising at least: a hydraulic steering actuator (105) and a hydrostatic steering unit (155); wherein the hydrostatic steering unit (155) comprises: a distributor (160) and a dosing unit (165); wherein the distributor (160) comprises: an inlet port (185), an outlet port (190), a first and a second connection port (195, 200), a first and a second service port (205, 210), and a movable intercept member (295), actuatable by a steering shaft (175), which is adapted to assume a neutral configuration, wherein it connects each of said first and second service ports (205, 210) with one of said first and second connection ports (195, 200); wherein the steering apparatus (100) further comprises: first valve means (235), for example a first solenoid valve, actuatable between a first operating configuration, wherein they separate said first and second connection ports (195, 200) from said hydraulic steering actuator (105), and a second operating configuration, wherein they connect said first and second connection ports (195, 200) with said hydraulic steering actuator (105); and wherein the dosing unit (165) comprises at least two dosing devices (300, 305), both actuatable by the steering shaft (175), of which: a first dosing device (300) connected between the first and second service ports (205, 210), and a second dosing device (305) associated with second valve means (330) actuatable, preferably by means of a second solenoid valve (375), between a first operating configuration, wherein they separate said second dosing device (305) from the service ports (205, 210), and a second operating configuration, wherein they connect said second dosing device (305) in parallel with the first dosing device (300).

## Description

### Technical field

The present invention concerns a steering apparatus for vehicles, in particular for agricultural vehicles and/or heavy-duty vehicles, such as for example tractors or earthmoving machines.

### Prior art

A known steering apparatus for agricultural vehicles and/or heavy-duty vehicles provides that the wheels of the vehicle are steered by means of a hydraulic actuator, for example a double-acting hydraulic jack, connected to a hydrostatic steering unit (commonly called a hydroguide).

The hydrostatic steering unit normally comprises a rotary hydraulic distributor and a dosing unit, which are both connected to and actuated by the steering wheel of the vehicle by means of a steering shaft.

When the steering wheel is actuated in one direction, the rotary hydraulic distributor moves into a configuration in which it is able to supply a pressurized hydraulic fluid, typically oil, into one of the two chambers of the double-acting jack, simultaneously connecting the other chamber for discharge.

In this way, the pressure difference between the two chambers actuates the plunger of the double-acting jack in the sense of progressively varying the steering angle of the wheels.

By reversing the direction of rotation of the steering wheel, the operation is the same, with the only difference that the rotary hydraulic distributor moves into a configuration such as to reverse the hydraulic connection between the two chambers of the double-acting jack, thus causing a steering of the wheels in the opposite direction with respect to the previous one.

In both cases, the dosing unit present in the hydrostatic steering unit has the function of dosing the amount of oil that is fed inside the one or the other chamber, depending on the angle of rotation imparted to the steering shaft through the steering wheel.

When the steering wheel is stopped, the hydraulic rotary distributor goes into a neutral configuration whereby no oil is fed into any of the hydraulic jack chambers.

In some steering apparatuses of this type, when the hydraulic rotary distributor is in neutral configuration, the hydraulic jack remains hydraulically connected to the dosing unit, so that any wheel movements due to external stresses, for example, also affect the steering shaft and the steering wheel, causing them to rotate.

This driving mode, which is called 'responsive mode', has the advantage of making driving more 'automotive' and thus easier and more intuitive, especially for vehicles which move (also) on the road.

In other similar steering apparatuses, when the hydraulic rotary distributor is in a neutral configuration, the hydraulic jack is instead hydraulically isolated from the dosing unit, so that any wheel movements do not cause any rotation of the steering shaft and steering wheel.

This driving mode, which is called 'non-reactive mode', is especially advantageous for vehicles moving over very rough terrain and/or using self-driving systems.

However, as both of these driving modes have advantages, this applicant has in the past proposed adaptive steering apparatuses which allow both modes.

In practice, adaptive steering apparatuses comprise a reactive-type hydraulic distributor and a further control valve, e.g., a solenoid valve, which is selectively able, e.g., upon the driver's command, to hydraulically connect and disconnect the hydraulic jack from the dosing unit, when the distributor is in neutral configuration.

In these adaptive steering apparatuses, the dosing unit always comprises a single dosing device, typically of the rotary type (gerotor), which is rotated by the steering shaft, so that an amount of hydraulic fluid (oil) is sent to the hydraulic jack which is proportional to the magnitude of the rotation imparted to the steering wheel by the driver.

Since vehicles provided with adaptive steering apparatuses are generally designed to also be driven on the road (for the reasons expressed previously), the dosing device is often dimensioned so that the response of the steering system is not overly rapid, viz., that a given rotation of the steering wheel does not correspond to an excessive steering angle imparted to the wheels, which could otherwise give the driver a sense of insecurity or instability in driving.

To achieve this effect, the displacement of the dosing device, i.e., the amount of hydraulic fluid it is able to transfer for a given angle of rotation, is chosen to be relatively small.

However, when the same vehicle has to manoeuvre in confined spaces, e.g., in a farmyard, at the end of a row, or when loading and unloading, the relatively small displacement of the dosing device forces the driver to make large and/or numerous rotations of the steering wheel, making such manoeuvres rather slow and tiring.

### Disclosure of the invention

An object of the present invention is to overcome or at least limit the mentioned drawback of the prior art, within the context of a simple and rational solution and at a relatively reduced cost.

These and other objects are reached by the characteristics of the invention as set forth in the independent claim 1. The dependent claims outline preferred and/or particularly advantageous aspects of the invention which however are not strictly required for the implementation thereof.

In particular, an embodiment of the present invention makes available a steering apparatus for vehicles, comprising at least:
- a hydraulic steering actuator, e.g., a double-acting hydraulic jack provided with a cylinder and a plunger adapted to subdivide the inner volume of the cylinder into a first and a second operating chamber,
- a hydrostatic steering unit hydraulically connected to the steering actuator, and
- a steering shaft,
wherein the hydrostatic steering unit comprises at least:
- a distributor, preferably of the rotary type, and
- a dosing unit,
wherein the distributor comprises:
- an inlet port for a hydraulic fluid,
- an outlet port for the hydraulic fluid,
- a first connection port hydraulically connectable with the steering actuator,
- a second connection port hydraulically connectable with the steering actuator,
- a first service port hydraulically connectable to the dosing unit,
- a second service port hydraulically connectable to the dosing unit, and
- a movable intercept member, actuatable by the steering shaft, which is adapted to assume a plurality of operating configurations and at least one neutral configuration, wherein it hydraulically connects each of said first and second service ports with a respective first and second connection port,
wherein the steering apparatus further comprises:
- first valve means, preferably comprising or consisting of a first solenoid valve, selectively actuatable between at least a first operating configuration, wherein they hydraulically separate each of said first and second connection ports from the hydraulic steering actuator, and a second operating configuration, wherein they hydraulically connect the first and second connection ports of the distributor with the hydraulic steering actuator,
and wherein the dosing unit comprises at least two dosing devices, preferably of the rotary type, both actuatable by the steering shaft, of which:
- a first dosing device hydraulically connected between the first service port and the second service port of the distributor, and
- a second dosing device associated with second valve means, which are actuatable, preferably by means of a second solenoid valve, between at least a first operating configuration, wherein they hydraulically separate said second dosing device from the first and second service ports of the distributor, and a second operating configuration, wherein they connect said second dosing device between the first service port and the second service port of the distributor, in parallel with the first dosing device.

Thanks to this solution, remaining within the scope of a steering apparatus which is adaptive thanks to the presence of the first valve means, it is advantageously possible to vary the amount of hydraulic fluid that is fed to the hydraulic steering actuator for a given rotation of the steering shaft through the actuation of the second valve means.

In fact, when both dosing devices are connected in parallel to the distributor, the amount of hydraulic fluid supplied to the hydraulic steering actuator will be greater than that which, for the same rotation of the steering shaft, is supplied when only the first dosing device is active.

This makes it advantageous to make steering faster and more direct, for example, when the vehicle has to manoeuvre at low speeds and in tight spaces, and then instead make it slower when the vehicle is driven at higher speeds, for example on the road.

In both cases, it will then be possible to use both a reactive and a non-reactive driving mode, significantly increasing the operating and application possibilities of this steering apparatus with respect to those of the prior art.

According to an aspect of the invention, the distributor can further comprise:
- a third connection port hydraulically connectable with the steering actuator,
- a fourth connection port hydraulically connectable with the steering actuator, the movable intercept member of the distributor being adapted to:
   - in a first operating configuration, hydraulically connect the first service port with said first and third connection ports and said second service port with said second and fourth connection ports,
   - in a second operating configuration, hydraulically connect the first service port with said second and fourth connection ports and the second service port with said first and third connection ports, and
   - in a neutral configuration, hydraulically separate each of said third and fourth connection ports from both the first and second service ports.

This aspect of the invention ensures that the steering apparatus is able to efficiently and reliably actuate the wheels of the vehicle, whenever the steering shaft is set in rotation, without requiring any intervention in the configuration imposed on the first valve means, i.e., maintaining the reactive or non-reactive driving mode unaltered.

Another aspect of the invention provides that the first and/or second valve means can be electrically actuatable.

Thereby, the first and/or second valve means can be advantageously actuated remotely, e.g., from the driver's cab of the vehicle, in an extremely simple and reliable manner.

According to another aspect of the invention, the first valve means can comprise a control valve comprising:
- a first inlet port hydraulically connected to the first connection port of the distributor,
- a second inlet port hydraulically connected to the second connection port of the distributor,
- a first outlet port hydraulically connected to the hydraulic steering actuator,
- a second outlet port hydraulically connected to the hydraulic steering actuator, and
- an intercept member movable at least between a first operating position, wherein it hydraulically separates each of said first and second inlet ports from each of said first and second outlet ports, and a second operating position, wherein it hydraulically connects said first inlet port with said first outlet port and said second inlet port with said second outlet port.

Thanks to this solution, it is advantageously possible to hydraulically connect and disconnect the first and second connection ports of the distributor to/from the hydraulic steering actuator with a single control valve.

Another aspect of the invention provides that the second valve means can comprise a control valve comprising:
- a first port hydraulically connected to the first service port of the distributor,
- a second port hydraulically connected to the second service port of the distributor,
- a third hydraulic port hydraulically connected to a first hydraulic port of the second dosing device,
- a fourth hydraulic port connected with a second hydraulic port of the second dosing device, and
- an intercept member movable at least between a first operating position, wherein it hydraulically separates each of said first and second ports from both said third and fourth ports, and a second operating position, wherein it hydraulically connects said first port with said third port and said second port with said fourth port.

Thanks to this solution, it is advantageously possible to hydraulically connect and disconnect the second dosing device with/ from the distributor with only one control valve.

In this context, the intercept member of the control valve of the second valve means is adapted, when in the first operating position, to hydraulically connect the third port with the fourth port.

Thanks to this solution, when hydraulically disconnected from the distributor, the second dosing device is hydraulically short-circuited, and therefore does not hinder the rotation of the steering shaft.

According to another aspect of the invention, the control valve of the second valve means can comprise:
- spring means adapted to act on the intercept member to push it into the first operating position,
- a first inlet for a first pressure signal adapted to act on the intercept member to push it into the second operating position, and
- a second inlet for a second pressure signal adapted to act on the intercept member to push it into the first operating position,

wherein one of said first and second inlets is hydraulically connected to one of: a hydraulic fluid supply port in communication with an inlet port of the distributor or a hydraulic fluid return port in communication with an outlet port of the distributor,
and wherein the other of said first and second inlets is associated with a selector valve, preferably electrically actuated, which is adapted to connect it hydraulically, in a selective manner, with said supply port and with said return port.

Thereby, the control valve of the second valve means is able to move automatically between the first and second operating positions, due to the difference between the first and second pressure signals, viz., depending on the position of the selector valve.

### Brief description of the drawings

Further features and advantages of the invention will be more apparent after reading the following description provided by way of a non-limiting example, with the aid of the accompanying drawings.
Figure 1 is a diagram of a steering apparatus according to an embodiment of the present invention.
Figure 2 is a detail of the diagram of Figure 1 showing the hydraulic steering actuator.
Figure 3 is a detail of Figure 1 showing the distributor.
Figure 4 is a detail of Figure 1 showing the control valve of the reactive and non-reactive driving system.
Figure 5 is a detail of Figure 1 showing the dosing unit.

### Detailed description

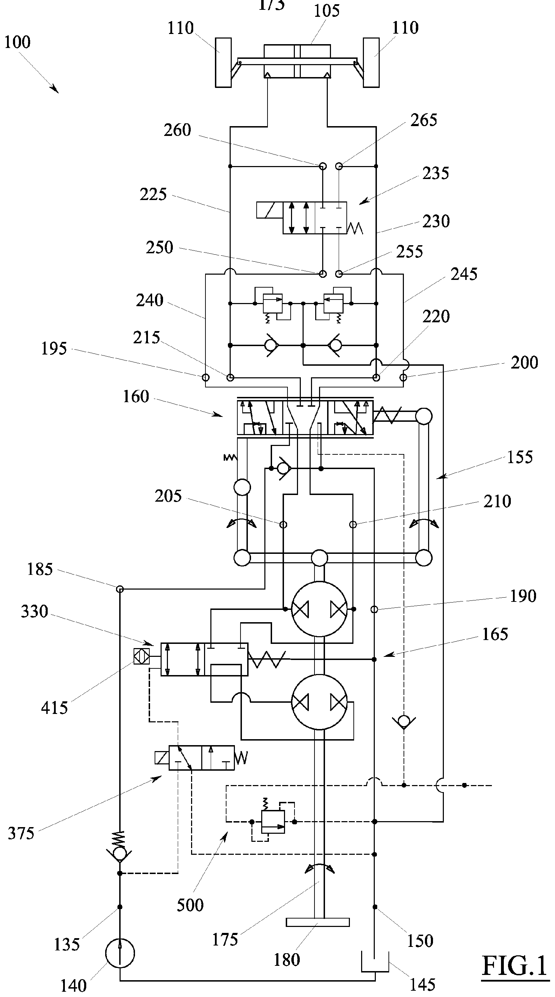

A steering apparatus 100 for self-propelled vehicles can be seen in Figure 1, in particular for agricultural vehicles and/or heavy-duty vehicles adapted to move at low speed (typically below 60 km/h), such as agricultural tractors or earth-working machines.

It should be noted that, in the following description of the steering apparatus 100, numerous hydraulic devices (e.g., valves, distributors, dosers, etc.) will be mentioned, each of which can be provided with what are called 'ports'. Each of these 'ports' can be a real hydraulic opening obtained in an external casing of the device, e.g., if the latter is made as a stand-alone component. Or, it could simply be a passage section of a conduit leading into the device, if, for example, said device is integrated with one or more other devices with which it shares the same outer body and/or with which it is connected by means of conduits obtained in said outer body.

In view of this, the steering apparatus 100 comprises at least one hydraulic steering actuator 105, which is adapted to be connected to steering wheels 110 of the vehicle, so as to cause the steering thereof.

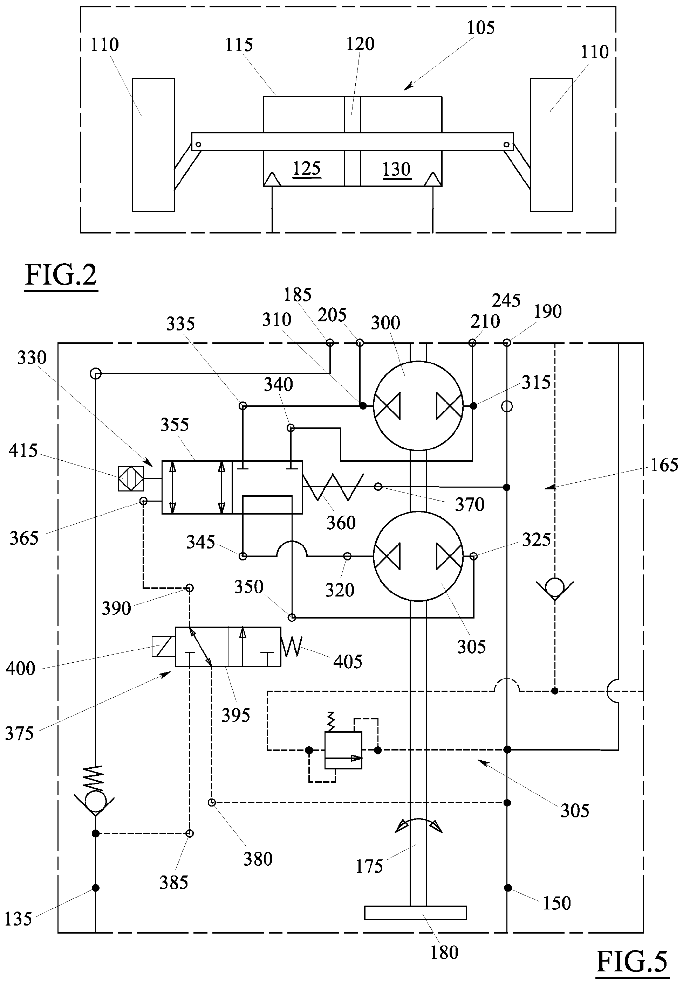

In the illustrated example (see Fig. 2), the hydraulic steering actuator 105 is a double-acting jack, which is provided with a cylinder 115 and with a relative plunger 120 which subdivides the inner volume of the cylinder 115 into two separate operating chambers 125 and 130.

The plunger 120 of the hydraulic jack can comprise two opposite stems, which are arranged parallel to the axis of the cylinder 115, preferably coaxial with the latter.

Each of these stems protrudes outside the cylinder 115 and can be mechanically connected to a respective steering wheel 110, e.g., by means of suitable levers, so as to transform the axial movement of each stem into a rotation of the respective steering wheel 110 around a preset steering axis.

Thereby, each movement of the plunger 120, in one direction or in the opposite direction, corresponds to a change in the steering angle of both steering wheels 110.

In other embodiments, the steering apparatus 100 could comprise a plurality of hydraulic steering actuators 105, for example a plurality of double-acting jacks, each of which is adapted to actuate a respective steering wheel 110 of the vehicle.

In both cases, each double-acting jack could be replaced by any other hydraulic motor, including those of the rotary type, that can be connected with the steering wheels 110 of the vehicle to cause them to steer in both directions.

The steering apparatus 100 can also generally comprise a supply port 135 adapted to receive a hydraulic fluid, typically an incompressible fluid (e.g., oil), in input.

The hydraulic fluid reaching the supply port 135 is a pressurized hydraulic fluid, viz., at a pressure higher (preferably much higher) than the ambient pressure.

For example, the supply port 135 can be connected with the delivery conduit of a pump 140, for example a piston displacement pump actuated by the motor of the vehicle, which can be adapted to withdraw the hydraulic fluid from a tank 145 and send it under pressure (pump it) towards the supply port 135.

The steering apparatus 100 can then comprise a return port 150, which can instead be placed unloading, for example in direct communication with the aforementioned tank 145. The steering apparatus 100 then comprises a hydrostatic steering unit 155, which can generally comprise a distributor 160 and a dosing unit 165.

The distributor 160 and the dosing unit 165 can be of the rotary type and, in any case, they can both be actuated by the same steering shaft 175, which can be provided with a steering wheel 180 or another suitable manual steering member.

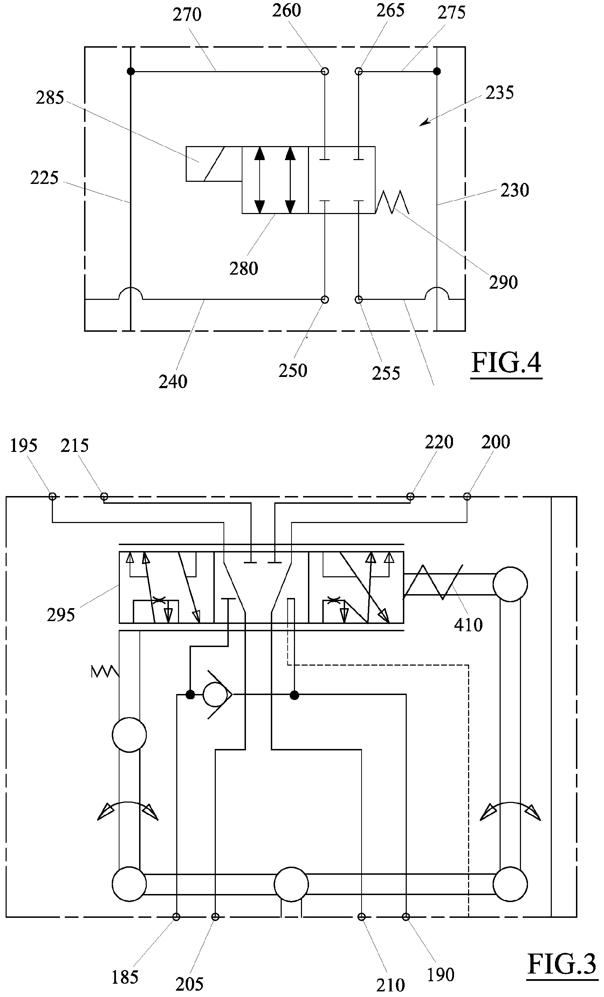

With particular reference to Figure 3, the distributor 160 can comprise an inlet port 185, an outlet port 190, two connection ports, of which a first connection port 195 and a second connection port 200, and two service ports, of which a first service port 205 and a second service port 210.

The distributor 160 can possibly comprise two further connection ports, of which a third connection port 215 and a fourth connection port 220.

While the inlet port 185 can be hydraulically connected to the supply port 135, so that it can receive hydraulic fluid under pressure, the outlet port 190 can be hydraulically connected to the return port 150, so that it can be unloaded.

The first and second service ports 205 and 210 can both be hydraulically connected to the dosing unit 165, according to the methods that will be described below.

The third connection port 215 can be hydraulically connected to the steering actuator 105, e.g., to the first operating chamber 125 of the (or of each) double-acting jack, preferably so as to be in constant communication therewith.

The fourth connection port 220 can also be hydraulically connected to the steering actuator 105, for example to the second operating chamber 130 of the (or of each) double-acting jack, preferably so as to be in constant communication therewith.

In particular, the third connection port 215 can be connected with the steering actuator 105 by means of an intake conduit 225, while the second connection port 220 can be connected with the steering actuator 105 by means of a second and different intake conduit 230 (see Fig. 1).

The first connection port 195 can also be hydraulically connected to the steering actuator 105, for example to the first operating chamber 125 of the (or of each) double-acting jack, but preferably through a control valve 235.

Similarly, the second connection port 200 can be hydraulically connected to the steering actuator 105, e.g., to the second operating chamber 130 of the (or of each) double-acting jack, and preferably always through the control valve 235.

In particular, the first connection port 195 can be connected with the steering actuator 105 by means of an intake conduit 240, while the second connection port 200 can be connected with the steering actuator 105 by means of a different intake conduit 245.

As better illustrated in Figure 4, the control valve 235 can comprise a first inlet port 250, a second inlet port 255, a first outlet port 260, and a second outlet port 265.

The first inlet port 250 of the control valve 235 can be hydraulically connected to the first connection port 195 of the hydraulic distributor 160, e.g., through the intake conduit 240. The second inlet port 255 of the control valve 235 can be hydraulically connected to the second connection port 200 of the hydraulic distributor 160, e.g., through the intake conduit 245.

The first outlet port 260 of the control valve 235 can be hydraulically connected to the steering actuator 105, for example to the first operating chamber 125 of the (or of each) double-acting jack, preferably so as to be in constant communication therewith.

For example, the first outlet port 260 can lead to a first connection port 270 which flows into the intake conduit 225, or directly into the steering actuator 105, for example into the first operating chamber 125 of the (or of each) double-acting jack.

The second outlet port 265 of the control valve 235 can also be hydraulically connected to the steering actuator 105, for example to the second operating chamber 130 of the (or of each) double-acting jack, preferably so as to be in constant communication therewith. For example, the second outlet port 265 can lead to a second connection port 275 which flows into the intake conduit 230, or directly into the steering actuator 105, for example into the second operating chamber 130 of the (or of each) double-acting jack.

The control valve 235 is further provided with at least one movable intercept member 280 which, by changing position with respect to a fixed part of the control valve 235, wherein the above-mentioned ports can be obtained, is able to assume different operating positions.

In the illustrated embodiment, the control valve 235 is a linear valve, viz., wherein the intercept member 280, which can for example be configured as a slide or a spool, is adapted to slide with respect to the fixed part in a straight direction.

It is not excluded, however, that in other embodiments, the control valve 235 can be of the rotary or other type.

In any case, in a first operating position (shown in Figure 4), the intercept member 280 can close/prevent any communication between each of the inlet ports 250 and 255 and each of the outlet ports 260 and 265 of the control valve 235.

Thereby, the first connection port 195 and the second connection port 200 of the distributor 160 are hydraulically isolated (closed/disconnected) with respect to the steering actuator 105.

In a second operating position (not shown), wherein, for example, the intercept member 280 is moved to the right with respect to the position of Figure 4, the intercept member 280 puts the first inlet port 250 in hydraulic connection with the first outlet port 260 and, at the same time, puts the second inlet port 255 in hydraulic connection with the second outlet port 265.

Thereby, the first connection port 195 and the second connection port 200 of the distributor 160 are in communication with the steering actuator 105 through the control valve 235.

The control valve 235 can be actuated by an electromechanical transducer 285, which can be adapted to move the intercept member 280 between various operating positions. The electromechanical transducer 285 can be any device adapted to convert electrical energy into mechanical energy that is actively applied to the control valve 235, viz., the intercept member 280, so as to cause it to actuate/move.

In other words, the control valve 235 can be a solenoid valve or (otherwise known as) electro-actuated valve.

More specifically, the control valve 235 can comprise spring means 290, typically one or more springs, which can keep the intercept member 280 normally in one of two intended operating positions, and the electromechanical transducer 285 can be adapted to move the intercept member 280, starting from said operating position, to the other operating position, in contrast with the spring means 290.

For example, in the embodiment of Figure 4, the spring means 290 are adapted to normally keep the intercept member 280 in the first operating position, viz., wherein the control valve 235 prevents hydraulic communication between the steering actuator 105 and the first and second connection ports 195 and 200 of the distributor 160.

In other embodiments, the spring means 290 could, however, be adapted to normally keep the intercept member 280 in the second operating position, viz., wherein the control valve 235 hydraulically connects the steering actuator 105 with the first and second connection ports 195 and 200 of the distributor 160.

In any case, the control valve 235 can be connected to an electronic control unit (not illustrated), which can be configured to control the operation of the electromechanical transducer 285, so as to move the intercept member 280 into the various operating positions as required.

For example, the electronic control unit can be configured to activate the electromechanical transducer 285, and thus move the intercept member 280 in contrast to the spring means 290, as a result of a manual command imparted, typically through a button or other interface, by the user of the vehicle on which the steering apparatus 100 is installed. Although only a single control valve 235 has been described, which is adapted to control the communication between the steering actuator 105 and both the first and second connection ports 195 and 200 of the distributor 160, it is not excluded that, in other embodiments, the steering apparatus 100 can comprise a plurality of control valves, for example similar to the one described above, one of which is intended to control the communication between the steering actuator 105 and the first connection port 195, while another is intended to control the communication between the steering actuator 105 and the second connection port 200.

The distributor 160, which in the drawings is diagrammed as a slide or linear valve, is generally adapted to also assume a plurality of different operating configurations.

More specifically (see Fig. 3), the distributor 160 is generally provided with at least one movable intercept member 295, which can change position in response to the rotation of the steering shaft 175, so that the different positions assumed by the intercept member 295 correspond to the various operating configurations of the distributor 160.

Indeed, in a first of these operating configurations (intercept member 295 shifted to the right with respect to Figure 3), the distributor 160 simultaneously makes the following hydraulic connections:
- the inlet port 185 with the second service port 210;
- the first service port 205 with both the first connection port 195 and the third connection port 215; and
- both the second connection port 200 and the fourth connection port 220 with the outlet port 190.

Thereby, the hydraulic fluid in input is conveyed to the dosing unit 165 and from there to the hydraulic steering actuator 105 through the intake conduit 225, and possibly also through the intake conduit 240 (when the control valve 235 is open), while the intake conduit 230 and the intake conduit 245 are both connected to discharge.

With reference to the illustrated example, the dosing unit 165 is therefore able to supply a certain amount of pressurized hydraulic fluid inside the first operating chamber 125 of the double-acting jack, which causes a movement of the plunger 120 in the sense of reducing the volume of the second operating chamber 130 (to the right in Figure 2).

In a second operating configuration (intercept member 295 shifted to the left with respect to Figure 3), the distributor 160 simultaneously makes the following hydraulic connections:
- the inlet port 185 with the first service port 205;
- the second service port 210 with both the second connection port 200 and the fourth connection port 220; and
- both the first connection port 195 and the third connection port 215 with the outlet port 190.

Thereby, the hydraulic fluid in input is conveyed to the dosing unit 165 and from there to the hydraulic steering actuator 105 through the intake conduit 230, and possibly also through the intake conduit 245 (when the control valve 235 is open), while the intake conduit 225 and the intake conduit 240 are both connected to discharge.

With reference to the illustrated example, the dosing unit 165 is therefore able to supply a certain amount of pressurized hydraulic fluid inside the second operating chamber 130 of the double-acting jack, which causes a movement of the plunger 120 in the sense of reducing the volume of the first operating chamber 125 (to the left in Figure 2).

Moving between these first and second operating configurations, the distributor 160 can also assume a neutral configuration, which is illustrated in Figure 3, and in which it can normally be maintained, e.g., by suitable spring means 410 (e.g., one or more springs). In the neutral configuration, the distributor 160 can close the communication between the inlet port 185 and each of the connection ports 195, 200, 215 and 220, as well as close the communication between each of said connection ports 195, 200, 215 and 220 and the outlet port 190.

In the neutral configuration, the distributor 160 can however connect the first service port 205 with the first connection port 195 and the second service port 210 with the second connection port 200.

Thereby, when the control valve 235 is in the second operating position (shifted to the right with respect to Figure 4), the dosing unit 165 and the hydraulic steering actuator 105 are in communication with each other, so that any movements of the steering wheels 110, due to external forces, can be transmitted hydraulically to the dosing unit 165 and from there to the steering shaft 175.

Conversely, when the control valve 235 is in the first operating position shown in Figure 4, the dosing unit 165 and the hydraulic steering actuator 105 are completely disconnected.

As best illustrated in Figure 5, the dosing unit 165 can comprise at least two dosing devices (or dosing pumps), of which a first dosing device 300 and a second dosing device 305.

These two dosing devices 300 and 305, which can both be coupled and mechanically actuated by the steering shaft 175, are adapted to be hydraulically connected in parallel between the first service port 205 and the second service port 210 of the distributor 160. In particular, the first dosing device 300 can comprise a first hydraulic port 310 and a second hydraulic port 315.

The first hydraulic port 310 is hydraulically connected to the first service port 205 of the distributor 160, preferably so as to be in constant communication therewith.

The second hydraulic port 315 is hydraulically connected to the second service port 210 of the distributor 160, preferably so as to be in constant communication therewith. Similarly, the second dosing device 305 can comprise a first hydraulic port 320 and a second hydraulic port 325.

The first hydraulic port 320 is intended to be hydraulically connected with the first service port 205 of the distributor 160, preferably in common node with the first hydraulic port 310 of the first dosing device 300.

The second hydraulic port 325 is intended to be hydraulically connected with the second service port 210 of the distributor 160, preferably in common node with the second hydraulic port 315 of the first dosing device 300.

In this case, however, the hydraulic connection is regulated by a control valve 330, which is switchable between a first operating position and a second operating position.

In the first operating position (illustrated in Figure 5), the control valve 330 prevents/closes the hydraulic connection between the first hydraulic port 320 of the second dosing device 305 and the first service port 205 of the distributor 160, and simultaneously also prevents/closes the hydraulic connection between the second hydraulic port 325 of the second dosing device 305 and the second service port 210 of the distributor 160.

In this first operating position, the control valve 330 is also preferably adapted to hydraulically connect the first and second hydraulic ports 320 and 325 of the second dosing device 305, which is therefore short-circuited.

Thereby, when the control valve 330 is in the first operating position, the second dosing device 305 does not prevent the free rotation of the steering shaft 175.

In more detail, the control valve 330 can comprise four ports, of which a first port 335, a second port 340, a third port 345 and a fourth port 350.

The first port 335 can be hydraulically connected with the first service port 205 of the distributor 160, e.g., in common node with the first hydraulic port 310 of the first dosing device 300, and preferably so as to be in constant communication therewith.

The second port 340 can be hydraulically connected with the second service port 210 of the distributor 160, e.g., in common node with the second hydraulic port 315 of the first dosing device 300, and preferably in constant communication therewith.

The third port 345 can be hydraulically connected to the first hydraulic port 320 of the second dosing device 305, preferably so as to be in constant communication therewith. Finally, the fourth port 350 can be hydraulically connected to the second hydraulic port 325 of the second dosing device 305, preferably so as to be in constant communication therewith.

The control valve 330 can be further provided with at least one movable intercept member 355 which, by changing position with respect to a fixed part of the control valve 330, wherein the above-mentioned ports can be obtained, is able to assume different operating positions.

In the illustrated embodiment, the control valve 330 is a linear valve, viz., wherein the intercept member 355, which can for example be configured as a slide or a spool, is adapted to slide with respect to the fixed part in a straight direction.

It is not excluded, however, that in other embodiments, the control valve 330 can be of the rotary or other type.

In any case, in the first operating position (shown in Figure 5), the intercept member 355 can close/prevent any communication between each of the first and second ports 335 and 340 with each of the third and fourth ports 345 and 350, preferably by putting the third and fourth ports 345 and 350 into communication with each other.

Thereby, the second dosing device 305 is hydraulically isolated from the distributor 160 and preferably short-circuited.

In the second operating position (not illustrated), wherein for example the intercept member 355 is shifted to the right with respect to Figure 5, the intercept member 355 hydraulically connects the first port 335 with the third port 345 and, at the same time, hydraulically connects the second port 340 with the fourth port 350.

Thereby, the second dosing device 305 is hydraulically connected between the first and second service ports 205 and 210 of the distributor 160, in parallel with the first dosing device 300.

The control valve 330 can comprise spring means 360, e.g., one or more springs, adapted to act on the intercept member 355, so as to constantly push it towards the first operating position.

The intercept member 355 can also be subjected to two pressure signals.

A first pressure signal is applied to a first inlet 365 of the control valve 330, e.g., of the fixed body in which the intercept member 355 is received, and is adapted to push the latter to the second operating position, in contrast to the spring means 360.

The second pressure signal is instead applied to a second inlet 370 of the control valve 330, e.g., of the fixed body in which the intercept member 355 is received, and is adapted to push the latter to the first operating position, in addition to the spring means 360. The second inlet 370 can be hydraulically connected to the return port 150 of the steering apparatus 100, whereby the second pressure signal can be equal to the atmospheric pressure and/or in any case to the pressure inside the tank 145.

The first inlet 365 can instead be selectively connected either with the return port 150 or, alternatively, with the supply port 135 of the steering apparatus 100.

In the first case, i.e., when the first inlet 365 is connected with the return port 150, the first pressure signal is equal to the second pressure signal, whereby the intercept member 355 can only be subjected to the force of the spring means 360.

Thereby, the intercept member 355 remains stably in the first operating position, wherein the second dosing device 305 is hydraulically isolated with respect to the distributor 160. In the second case, i.e., when the first inlet 365 is connected with supply port 135, the first pressure signal is generally higher (or at least not lower) than the second pressure signal.

Therefore, if the first pressure signal is sufficiently high to generate a higher thrust on the intercept member 355 than that exerted by the spring means 290 and the second pressure signal, the control valve 330 automatically moves to the second operating position, in which the two dosing devices 300 and 305 are connected in parallel.

It should be noted that the spring means 290 are generally chosen and dimensioned so that, in normal operation of the steering apparatus 100, e.g., when the pump 140 is in operation, this condition is always fulfilled.

If, however, the pressure of the hydraulic fluid at the supply port 135 should drop below a critical threshold, e.g., due to a failure or malfunction of the pump 140, the spring means 290 can move the control valve 330 to the first operating position, wherein the second dosing device 305 is isolated from the distributor 160 and wherein only the first dosing device 300 remains operational.

Thereby, the first dosing device 300 can be effectively used as an emergency manual pump to supply hydraulic fluid under pressure to the hydraulic steering actuator 105.

In order to be able to connect the first inlet 365 of the control valve 330 selectively with the return port 150 or with the supply port 135, the steering apparatus 100 can comprise a selector valve 375, which is switchable between a first operating position, illustrated in the figures, in which it connects the first inlet 365 of the control valve 330 with the return port 150, and a second operating position (not illustrated), in which it connects the first inlet 365 of the control valve 330 with the supply port 135.

For example, the selector valve 375 can comprise three ports, of which a first inlet port 380, a second inlet port 385, and an outlet port 390.

The first inlet port 380 can be hydraulically connected to the return port 150 of the steering apparatus 100, preferably so as to be in constant communication therewith.

The second inlet port 380 can be hydraulically connected to the supply port 135 of the steering apparatus 100, preferably so as to be in constant communication therewith. The outlet port 390 can be hydraulically connected to the first inlet 365 of the control valve 330, preferably so as to be in constant communication therewith.

The selector valve 375 can be further provided with at least one movable intercept member 395 which, by changing position with respect to a fixed part of the selector valve 375, wherein the above-mentioned ports can be obtained, is able to assume different operating positions.

In the illustrated embodiment, the selector valve 375 is a linear valve, viz., wherein the intercept member 395, which can for example be configured as a slide or a spool, is adapted to slide with respect to the fixed part in a straight direction.

It is not excluded, however, that in other embodiments, the selector valve 375 can be of the rotary or other type.

In any case, in the first operating position (shown in Figure 5), the intercept member 395 can, as mentioned above, connect the first inlet port 380 of the selector valve 375 with the outlet port 390, and, for example, close the second inlet port 385.

In the second operating position (not illustrated), wherein, for example, the intercept member 395 is shifted to the left with respect to what is shown in Figure 5, the intercept member 395 can hydraulically connect the second inlet port 385 with the outlet port 390, and for example close the first inlet port 380.

Preferably, the selector valve 275 is actuated by an electromechanical transducer 400, which can be adapted to move the intercept member 395 between the various operating positions.

The electromechanical transducer 400 can be any device adapted to convert electrical energy into mechanical energy that is actively applied to the selector valve 375, viz., the intercept member 395, so as to cause it to actuate/move.

In other words, the selector valve 375 can be a solenoid valve or (otherwise known as) electro-actuated valve.

More specifically, the selector valve 375 can comprise spring means 405, typically one or more springs, which can keep the intercept member 395 normally in one of two intended operating positions, and the electromechanical transducer 400 can be adapted to move the intercept member 395, starting from said operating position, to the other operating position, in contrast with the spring means 405.

For example, in the embodiment of Figure 5, the spring means 405 are adapted to normally maintain the intercept member 280 in the second operating position (not illustrated), viz., wherein the selector valve 375 connects the first inlet 365 of the control valve 330 with the supply port 135 of the steering apparatus 100.

However, it is not excluded that in other embodiments, the spring means 405 can instead be adapted to normally maintain the intercept member 395 in the first operating position, viz., wherein the selector valve 375 connects the first inlet 365 of the control valve 330 with the return port 150.

In any case, the selector valve 375 can be connected to an electronic control unit (not illustrated), which can be configured to control the operation of the electromechanical transducer 400, so as to move the intercept member 395 into the various operating positions as required.

For example, the electronic control unit can be configured to actuate the electromechanical transducer 400, and thus move the intercept member 395 in contrast to the spring means 405, following a manual command imparted by the user of the vehicle on which the steering apparatus 100 is installed, typically through a button or any other interface which can be placed, for example, in the driver's seat.

Although a selector valve 375 has been described which is adapted to selectively connect the first inlet 365 of the control valve 330 with the return port 150 or the supply port 135 of the steering apparatus 100, it is not excluded that in other embodiments, the first inlet 365 of the control valve 330 is constantly connected with the supply port 135 and that a selector valve 375, e.g., substantially analogous to the one described above, can be arranged to selectively connect the return port 150 or the supply port 135 of the steering apparatus 100 with the second inlet 370 of the control valve 330, while still obtaining the same behaviour as the latter.

As mentioned above, the distributor 160 and both dosing devices 300 and 305 can be of the rotary type.

For example, each dosing device 300 and 305 can be shaped as a sort of positive displacement pump, commonly referred to as a 'gerotor', which comprises a lobed rotor which meshes with a lobed stator, wherein the lobed rotor is slightly offset with respect to the lobed stator and is directly connected to the steering shaft 175.

The distributor 160 can instead comprise two cylinders coaxially inserted into each other, of which an inner cylinder directly keyed to the steering shaft 175 and an outer cylinder adapted to rotate with respect to the inner cylinder by a limited angle in both directions. When the steering shaft 175 is stationary, the outer cylinder of the distributor 160 is in a certain angular position with respect to the inner cylinder, which corresponds to the neutral configuration.

At the moment in which the steering shaft 175 is actuated in either direction, the inner cylinder of the distributor 160 makes a small rotation with respect to the outer cylinder and moves into an angular position that corresponds, for example, to the first operating configuration.

Thereby, continuing to rotate the steering shaft 175 in the same direction, the first dosing device 300 transfers to the intake conduit 225 and the intake conduit 240 an amount of hydraulic fluid under pressure that is proportional to the rotation completed by the steering shaft 175, thereby actuating the hydraulic steering actuator 105 in one direction.

By reversing the direction of rotation of the steering shaft 175, the operation of the hydrostatic steering unit 155 is the same, with the only difference that the inner cylinder of the distributor 160 moves into an angular position that corresponds, for example, to the second operating configuration.

Thereby, continuing to rotate the steering shaft 175 in the same direction (opposite the previous one), the first dosing device 300 transfers to the intake conduit 230 and the intake conduit 245 an amount of hydraulic fluid under pressure that is always proportional to the rotation completed by the steering shaft 175, thereby actuating the hydraulic steering actuator 105 in the direction opposite the previous one.

In these contexts, if the control valve 330 is in the first operating position of Figure 5, viz., wherein the second dosing device 305 is isolated from the distributor 160, the hydraulic steering actuator 105 only receives the amount of hydraulic fluid provided by the first dosing device 300.

If the control valve 330 is instead in the second operating position (not illustrated), viz., wherein the second dosing device 305 is connected in parallel to the first dosing device 300, the rotation of the steering shaft 175 (in either direction) also causes the second dosing device 305 to transfer to the intake conduit 225 and the intake conduit 240 an amount of hydraulic fluid under pressure which is proportional to the rotation completed by the steering shaft 175.

Therefore, with the same rotation of the steering shaft 175, the hydraulic steering actuator 105 receives an amount of hydraulic fluid under pressure which is greater (being equal to the sum of that provided by the first and second dosing devices 300 and 305), than that which it would receive with the control valve 330 in the first operating position (which would be equal to that provided by the first dosing device 300 alone).

For example, if the displacement of the two dosing devices 300 and 305 were the same, the hydraulic steering actuator 105 would receive twice as much hydraulic fluid under pressure as it would with the control valve 330 in the first operating position.

Therefore, for the same rotation of the steering shaft 175, when the control valve 330 is in the second operating position, the steering wheels 110 of the vehicle steer more with respect to when the control valve 330 is in the second operating position, from which it follows that the steering is much more direct and/or rapid (i.e., relatively small rotations of the steering shaft 175 are sufficient to obtain significant steering angles).

This driving mode, which can be achieved by keeping the selector valve 375 in the second operating position, e.g., by not supplying the electromechanical transducer 400, is particularly but not exclusively useful for manoeuvring in tight spaces, e.g., in farmyards, at the end of a row, or when loading and unloading.

In other circumstances, for example when driving on the road or at high speed, a less direct and/or faster steering mode can be more appropriate, e.g., safer and more stable. In such circumstances, it is therefore possible, for example by actuating the electromechanical transducer 400, to move the selector valve 375 into the first operating position and consequently also the control valve 330 into the first operating position (as illustrated in Figure 5), so that only the first dosing device 300 remains in operation and the hydraulic steering actuator 105 receives less hydraulic fluid under pressure.

In this regard, it should be noted that the control valve 330 can be associated with a sensor 415, e.g., a position transducer, which is adapted to detect in which position the control valve 330 itself, or its movable intercept member 355, is located.

This sensor 415 can be connected with the electronic control unit (ECU), e.g., with a diagnostic function, so as to allow it to understand whether driving is occurring with a single or dual dosing device (gerotor) and, for example, control/manage the operation of other vehicle apparatuses accordingly.

This sensor 415, which is particularly useful for safety management in driving on roads, can in fact generally be present in road applications, while in off-road applications it can be omitted, e.g., if the safety analysis allows it.

When the steering shaft 175 is stopped, the outer cylinder of the distributor 160 returns to the central position, which corresponds to the neutral configuration, e.g., by the spring means 410, preventing the hydraulic fluid coming from the supply port 135 from reaching the hydraulic steering actuator 105.

In this neutral configuration, as mentioned above, the distributor 160 can hydraulically connect the first service port 205 with the first connection port 195 and the second service port 210 with the second connection port 200.

If the control valve 235 is in the second operating position, e.g., because the electromechanical transducer 285 has been activated (electrically supplied), the hydraulic steering actuator 105 is still hydraulically connected to at least the first dosing device 300 (and possibly also to the second dosing device 305).

Therefore, any movement of the steering wheels 110, for example due to external forces, can cause a corresponding movement of the hydraulic fluid in the hydraulic circuit, which, by passing through and causing the first dosing device 300 and, if connected in parallel, also the second dosing device 305 (which act as turbines) to rotate, also causes the steering shaft 175 to rotate.

This operating mode, referred to as 'reactive mode', can have the advantage, for example, of automatically re-centring the steering shaft 175, and thus also any steering wheel 180 associated therewith, when the vehicle's steering wheels 110 realign in the straight travel direction due to their convergence.

The reactive mode is therefore highly appreciated, for example, when the vehicle on which the steering apparatus 100 is installed is moving on the road, as it helps and makes driving more 'automotive'.

However, there are circumstances in which the reactive operating mode of the steering apparatus 100 is inadvisable, while a 'non-reactive' mode is advisable.

One such circumstance occurs, for example, when the vehicle is moving over rough terrain, as it is preferable for the vehicle to maintain the steering state of the wheels 110 imposed by the driver, without the significant stresses transmitted to the wheels from the terrain changing it and/or affecting the driver, e.g., through the steering wheel 180. Another circumstance that makes a non-reactive mode preferable is when the vehicle is using a self-driving system, as the movements of the wheels 110 (which in this case can be achieved with separate hydraulic valves), would cause the steering shaft 175 and any steering wheel 180 associated therewith to rotate, disturbing the driver and/or causing the self-driving system to be deactivated.

Under all these circumstances, it is therefore possible, e.g., by deactivating the electromechanical transducer 285 (interrupting the power supply thereof), to cause the control valve 235 to move in the first operating position (as illustrated in Figure 4).

Thereby, the hydraulic steering actuator 105 is in fact hydraulically isolated with respect to the dosing devices 300 and 305, with the result that the steering shaft 175 always remains stationary, regardless of what happens to the steering wheels 110 of the vehicle. It should be noted that, in the illustrated example, wherein the spring means 290 tend to keep the control valve 235 in the first operating position, the steering apparatus 100 is normally in non-reactive mode, and the driver can switch to reactive mode when necessary, for example by controlling the actuation of the electromechanical transducer 285.

However, it cannot be excluded that, in other embodiments, the spring means 290 and the electromechanical transducer 285 are arranged opposite, with the spring means 290 maintaining the control valve 235 in the second operating position and the electromechanical transducer 285 pushing it in contrast to the first operating position.

In these cases, the steering apparatus 100 is therefore normally in reactive mode, and the driver can switch to non-reactive mode when necessary, for example by controlling the actuation of the electromechanical transducer 285.

The choice of a normal reactive or non-reactive operating condition generally depends on the purpose/features of the vehicle on which the steering apparatus 100 is installed. Finally, it should be noted that although the steering apparatus 100 illustrated in the figures is further provided with a load-sensing hydraulic circuit 500, in other embodiments, said load-sensing hydraulic circuit 500 could be absent.

Obviously, a person skilled in the art can make numerous modifications of a technical-applicative nature to everything described above, without thereby departing from the scope of the invention as claimed below.

## Claims

1. A steering apparatus (100) for vehicles, comprising at least:
- a hydraulic steering actuator (105),
- a hydrostatic steering unit (155) hydraulically connected to the steering actuator (105), and
- a steering shaft (175),
wherein the hydrostatic steering unit (155) comprises at least:
- a distributor (160), and
- a dosing unit (165),
wherein the distributor (160) comprises:
- an inlet port (185) for a hydraulic fluid,
- an outlet port (190) for the hydraulic fluid,
- a first connection port (195) hydraulically connectable to the steering actuator (105),
- a second connection port (200) hydraulically connectable to the steering actuator (105),
- a first service port (205) hydraulically connectable to the dosing unit (165),
- a second service port (210) hydraulically connectable to the dosing unit (165), and
- a movable intercept member (295), actuatable by the steering shaft (175), which is adapted to assume a plurality of operating configurations and at least one neutral configuration, wherein it hydraulically connects each of said first and second service ports (205, 210) with a respective one of said first and second connection ports (195, 200),
and wherein the steering apparatus (100) also comprises:
- first valve means (235) selectively actuatable between at least a first operating configuration, wherein they hydraulically separate each of said first and second connection ports (195, 200) from the hydraulic steering actuator (105), and a second operating configuration, wherein they hydraulically connect the first and second connection ports (195, 200) of the distributor (160) with the hydraulic steering actuator (105),
**characterised in that** the dosing unit (165) comprises at least two dosing devices (300, 305), both of which can be actuated by the steering shaft (175), of which:
- a first dosing device (300) hydraulically connected between the first service port (205) and the second service port (210) of the distributor (160), and
- a second dosing device (305) associated to second valve means (330), which are actuatable between at least a first operating configuration, wherein they hydraulically separate said second dosing device (305) from the first and second service ports (205, 210) of the distributor (160), and a second operating configuration, wherein they connect said second dosing device (305) between the first service port (205) and the second service port (210) of the distributor (160), in parallel with the first dosing device (300).

2. A steering apparatus (100) according to claim 1, wherein the distributor (160) further comprises:
- a third connection port (215) hydraulically connectable to the steering actuator (105),
- a fourth connection port (220) hydraulically connectable to the steering actuator (105),
the movable intercept member (295) of the distributor (160) being adapted to:
- in an first operating configuration, hydraulically connect the first service port (205) with said first and third connection ports (195, 215) and said second service port (210) with said second and fourth connection ports (200, 220),
- in a second operating configuration, hydraulically connect the first service port (205) with said second and fourth connection ports (200, 220) and the second service port (210) with said first and third connection ports (195, 215), and
- in the neutral configuration, hydraulically separate each of said third and fourth connection ports (215, 220) from both the first and second service ports (205, 210).

3. A steering apparatus (100) according to any one of the preceding claims, wherein said first valve means (235) are electrically actuatable.

4. A steering apparatus (100) according to any one of the preceding claims, wherein said first valve means comprises a control valve (235) comprising:
- a first inlet port (250) hydraulically connected to the first connection port (195) of the distributor (160),
- a second inlet port (255) hydraulically connected to the second connection port (200) of the distributor (160),
- a first outlet port (260) hydraulically connected to the hydraulic steering actuator (105),
- a second outlet port (265) hydraulically connected to the hydraulic steering actuator (105), and
- an intercept member (280) movable at least between a first operating position, wherein it hydraulically separates each of said first and second inlet ports (250, 255) from each of said first and second outlet ports (260, 265), and a second operating position, wherein it hydraulically connects said first inlet port (250) with the first outlet port (260) and said second inlet port (255) with the second outlet port (265).

5. A steering apparatus (100) according to any one of the preceding claims, wherein said second valve means (330) are electrically actuatable.

6. A steering apparatus (100) according to any one of the preceding claims, wherein said second valve means comprise a control valve (330) comprising:
- a first port (335) hydraulically connected to the first service port (205) of the distributor (160),
- a second port (340) hydraulically connected to the second service port (210) of the distributor (160),
- a third port (345) hydraulically connected to a first hydraulic port (320) of the second dosing device (305),
- a fourth port (350) hydraulically connected to a second hydraulic port (325) of the second dosing device (305), and
- a intercept member (355) movable at least between a first operating position, wherein it hydraulically separates each of said first and second ports (335, 340) from both said third and fourth ports (345, 350), and a second operating position, wherein it hydraulically connects the first port (335) with the third port (345) and the second port (340) with the fourth port (350).

7. A steering apparatus (100) according to claim 6, wherein the intercept member (355) of the control valve (330) of the second valve means is adapted, when it is in the first operating position, to put in hydraulic communication the third port (345) with the fourth port (350).

8. A steering apparatus (100) according to claim 6 or 7, **characterised in that** the control valve (330) of the second valve means comprises:
- spring means (360) adapted to act on the intercept member (355) to push it into the first operating position,
- a first inlet (365) for a first pressure signal adapted to act on the intercept member (355) to push it into the second operating position, and
- a second inlet (370) for a second pressure signal adapted to act on the intercept member (355) to push it into the first operating position,
wherein one of said first and second inlets (370) is hydraulically connected with one of: a port (135) supplying hydraulic fluid in communication with the inlet port (185) of the distributor (160) or with a return port (150) of hydraulic fluid in communication with an outlet port (190) of the distributor (160),
and wherein the other of said first and second inlets (370) is associated with a selector valve (375) adapted to hydraulically connect it, selectively, with said supply port (135) and with said return port (150).

9. A steering apparatus (100) according to claim 8, wherein the selector valve (375) is electrically actuatable.

10. A steering apparatus (100) according to any one of the preceding claims, wherein the distributor (160), the first dosing device (300) and the second dosing device (305) are all of the rotary type.

11. A steering apparatus (100) according to any one of the preceding claims, wherein the hydraulic steering actuator (105) comprises a double-acting hydraulic ram having a cylinder (115) and a plunger (120) adapted to divide the internal volume of the cylinder (115) into a first and a second operating chamber (125, 130).
